# EUROPEAN PATENT APPLICATION

(11) **EP 3 208 291 A1**
(43) Date of publication of application: **23.08.2017**
(21) Application number: 16155914.1
(22) Date of filing: 16.02.2016
(51) Int. Cl.: C08G 59/00, C09K 11/02, C09K 11/56, C09K 11/88

(54) **NANOCRYSTAL EPOXY THIOL COMPOSITE MATERIAL AND NANOCRYSTAL EPOXY THIOL COMPOSITE FILM**

(71) Applicant: Henkel AG & Co. KGaA, 40589 Düsseldorf (DE)
(72) Inventor: NEGELE, Carla, Dormagen 41539 (DE); MAI, Claudia, 40597 Düsseldorf (DE); BESLER, Alissa, 40591 Düsseldorf/Wersten (DE)

(57) **Abstract**

The present invention relates to a nanocrystal composite comprising a) a plurality of nanocrystals comprising a core comprising a metal or a semiconductive compound or a mixture thereof and at least one ligand, wherein said core is surrounded by at least one ligand, b) a polymeric matrix, wherein said polymeric matrix is formed by reaction of epoxy having functionality from 2 to 10 and polythiol having functionality from 2 to 10 or said polymeric matrix is formed by reaction of epoxy having functionality from 2 to 10, (meth)acrylate having functionality from 2 to 10 and polythiol having functionality from 2 to 10, and wherein said nanocrystals are embedded into said polymeric matrix.

## Description

### Technical field

The present invention relates to a nanocrystal composite comprising nanocrystals in polymeric matrix. Composites of the present invention provide thermal and photothermal stability to the nanocrystals.

### Background of the invention

Semiconductor nanocrystals can be used as light down-converters, i.e., shorter wavelength light is converted to longer wavelength light. The nanocrystal (NC) composites are used in a broad range of applications including displays, lighting, security inks, bio-labelling and solar concentrators. In all the cases, the NC composites are exposed to a certain light flux and temperature. The exposure of the NC composites to photons and temperature under the presence of air and moisture causes decrease of the optical properties of the composite.

NC composites are used in light down-conversion applications. The state of the art NC composites degrade by exposure to temperature and photons over time. To improve the stability of the NCs, the composites need an additional protection against oxygen and moisture e.g. by a high performance barrier film or glass encapsulation. To avoid the presence of air and moisture in the encapsulated NC composite, the manufacturing has to be performed under inert atmosphere.

NCs are synthesized in solution and can be further embedded in polymer matrices that act as a carrier and first protective layer. Physical mixing of NC solutions with a polymer solution or a crosslinking formulation is a common approach used in the art to obtain NC-polymer composite materials.

The most common matrices for NC composites used in down-conversion are based on acrylate or epoxy resins. Rapid curing speed initiated by UV irradiation and/or elevated temperatures makes them easy to process for large scale film manufacturing. NCs embedded in acrylate- or epoxy-based matrices tend to degrade under operation conditions. Therefore, an additional barrier film is needed to prevent the permeability of oxygen and moisture inside the adhesive, which increases the cost and thickness of the final product.

To overcome the problems related to the thermal and photon degradation of the NCs, two approaches have been used and reported. In the first approach, an epoxy-amine resin containing NCs are placed between barrier layers. However, this approach provides thicker products and is more expensive to produce. Despite the use of the barrier layers, oxygen and moisture still penetrate the unprotected edges of the product, and leads to a degradation in these areas. Meaning that with the currently available barrier films, the photothermal and thermal reliability is not always sufficient. Furthermore, current barrier films do not provide sufficient barrier protection at the cut edge of the QD films, which leads to edge ingress. The width of such inactive edges grows with aging time. In the second approach, the NCs are embedded in an acrylic polymerizable formulation and subsequently, further encapsulate the NC composite is further encapsulated inside a glass tube. The process requires a sophisticated manufacturing line under oxygen and/or moisture free environment. Furthermore, such fragile products require a modification of the product architecture and manufacturing process.

In a further approach, thiols have been used, as a part of the adhesive matrix for quantum dot (QD) composites. Thiols have been found to be beneficial for their thermal stability broadening the range of matrix chemistries with a good QD dispersion. However, degradation caused by photons cannot be prevented completely in combination with state of the art polymer matrices.

Therefore, there is still a need for a nanocrystal composites comprising barrier layers, which provide improved thermal and photothermal stability to the nanocrystals.

### Short description of the figures

Figure 1 illustrates the photothermal aging of the NC-composite according to the present invention and commercially available NC-composite.
Figure 2 illustrates thermal aging of the NC-composite according to the present invention and commercially available NC-composite.

### Summary of the invention

The present invention relates to a nanocrystal composite comprising a) a plurality of nanocrystals comprising a core comprising a metal or a semiconductive compound or a mixture thereof and at least one ligand, wherein said core is surrounded by at least one ligand, b) a polymeric matrix, wherein said polymeric matrix is formed by reaction of epoxy having functionality from 2 to 10 and polythiol having functionality from 2 to 10 or said polymeric matrix is formed by reaction of epoxy having functionality from 2 to 10, (meth)acrylate having functionality from 2 to 10 and polythiol having functionality from 2 to 10, and wherein said nanocrystals are embedded into said polymeric matrix.

The present invention also relates to a cured nanocrystal composite according to the present invention.

The present invention encompasses a film comprising a nanocrystal composite according to the present invention, wherein said film comprises a first barrier film and a second barrier film, wherein said nanocrystal composite is between the first and second barrier film.

The present invention also encompasses a product comprising a nanocrystal composite according to the present invention, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

The present invention also relates to a use of nanocrystal composite according to the present invention as a source of photoluminescence or electroluminescence.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in the disclosing invention, including technical and scientific terms, have the meaning as commonly understood by one of the ordinary skill in the art to which this invention belongs to. By means of further guidance, term definitions are included to better appreciate the teaching of the present invention.

As used herein, the use of the term "(meth)" followed by another term such as acrylate refers to both acrylates and methacrylates. For example, the term "(meth)acrylate" refers to either acrylate or methacrylate.

The present invention addresses a class of polymer matrices, which act itself as a protection to the NCs.

The present invention provides a nanocrystal composite comprising a) a plurality of nanocrystals comprising a core comprising a metal or a semiconductive compound or a mixture thereof and at least one ligand, wherein said core is surrounded by at least one ligand, b) a polymeric matrix, wherein said polymeric matrix is formed by reaction of epoxy having functionality from 2 to 10 and polythiol having functionality from 2 to 10 or said polymeric matrix is formed by reaction of epoxy having functionality from 2 to 10, (meth)acrylate having functionality from 2 to 10 and polythiol having functionality from 2 to 10, and wherein said nanocrystals are embedded into said polymeric matrix.

The nanocrystal composite according to the present invention provides increased photothermal and thermal stability for the nanocrystals. In addition, nanocrystal composite according to the present invention provides smaller edge ingress and is easy to process.

All features of the present invention will be discussed in details.

A NC composite according to the present invention comprises a plurality of NCs comprising a core comprising a metal or a semiconductive compound or a mixture thereof.

The core of the NCs according to the present invention has a structure including the core alone or the core and one or more shell(s) surrounding the core. Each shell may have a structure comprising one or more layers, meaning that each shell may have monolayer or multilayer structure. Each layer may have a single composition or an alloy or concentration gradient.

In one embodiment, the core of the NCs according to the present invention has a structure comprising a core and at least one monolayer or multilayer shell. Yet, in another embodiment, the core of the nanocrystals according to the present invention has a structure comprising a core and at least two monolayer and/or multilayer shells.

Preferably, the size of the core of the NCs according to the present invention is less than 100 nm, more preferably less than 50 nm, more preferably less than 10 nm, however, preferably the core is larger than 1 nm. The particle size is measured by using transmission electron microscopy (TEM).

The shape of the nanocrystal can be chosen from a broad range of geometries. Preferably the shape of the core of the NCs according to the present invention is spherical, rectangular, rod, tetrapod, tripod or triangle shape.

The core of the NCs is composed of a metal or a semiconductive compound or a mixture thereof. Moreover, metal or semiconductive compound is combination of one or more elements selected from combination of one or more different groups of the periodic table.

Preferably, metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof.

More preferably said metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AIN, AIP, AIAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ and AgGaSe₂, and even more preferably said metal or semiconductive compound is selected from group consisting of CdSe, InP and mixtures thereof.

Preferred metal or semiconductive compounds provide better optical properties. CdSe is highly preferred because it provides best optical properties, on the other hand, InP provides best optical properties of Cd free NCs, and is therefore, less toxic.

Preferably, NCs according to the present invention have a particle diameter (e.g. largest particle diameter, including core and shell) ranging from 1 nm to 100 nm, preferably from 1 nm to 50 nm and more preferably from 1 nm to 15 nm. The particle size is measured by using transmission electron microscopy (TEM).

The core of the NCs is surrounded by at least one ligand. Preferably, the whole surface of the NCs is covered by ligands. It is believed by the theory that when the whole surface of the NC is covered by ligands the optical performance of the NC is better.

Suitable ligands for use in the present invention are alkyl phosphines, alkyl phosphine oxides, amines, thiols, polythiols, carboxylic acids, phosphonic acids and similar compounds and mixtures thereof.

Examples of suitable alkyl phosphines for use in the present invention as a ligand are tri-n-octylphosphine, trishydroxylpropylphosphine, tributylphosphine, tri(dodecyl)phosphine, dibutyl-phosphite, tributyl phosphite, trioctadecyl phosphite, trilauryl phosphite, tris(tridecyl) phosphite, triisodecyl phosphite, bis(2-ethylhexyl)phosphate, tris(tridecyl) phosphate and mixtures thereof.

Example of suitable alkyl phosphine oxides for use in the present invention as a ligand is tri-n-octylphosphine oxide.

Examples of suitable amines for use in the present invention as a ligand are oleylamine, hexadecylamine, octadecylamine, bis(2-ethylhexyl)amine, dioctylamine, trioctylamine, octylamine, dodecylamine/laurylamine, didodecylamine, tridodecylamine, dioctadecylamine, trioctadecylamine and mixtures thereof. Primary amines are preferred as ligands due to less steric hindrance.

Examples of suitable thiol for use in the present invention as a ligand is 1-dodecanethiol.

Examples of suitable thiols for use in the present invention as a ligand are pentaerythritol tetrakis (3-mercaptobutylate), pentaerythritol tetrakis(3-mercaptopropionate), trimethylolpropane tri(3-mercaptopropionate), tris[2-(3-mercaptopropionyloxy) ethyl]isocyanurate, dipenta- erythritol hexakis(3-mercaptopropionate), ethoxilatedtri-methylolpropan tri-3-mercapto-propionate and mixtures thereof.

Thiols can also be used in the present invention in their deprotonated form.

Examples of suitable carboxylic acids and phosphonic acids for use in the present invention as a ligand are oleic acid, phenylphosphonic acid, hexylphosphonic acid, tetradecylphosphonic acid, octylphosphonic acid, octadecylphosphonic acid, propylenediphosphonic acid, phenylphosphonic acid, aminohexylphosphonic acid and mixtures thereof.

Carboxylic acids and phosphonic acids can also be used in the present invention in their deprotonated form.

Examples of other suitable ligands for use in the present invention are dioctyl ether, diphenyl ether, methyl myristate, octyl octanoate, hexyl octanoate, pyridine and mixtures thereof.

Selected ligands stabilize the NC in a solution.

Commercially available NC for use in the present invention is for example CdSeS/ZnS from Sigma Aldrich.

A NC composite according to the present invention comprises NCs from 0.01 to 10 % by weight of the total weight of the composite, preferably from 0.05 to 7.5%, more preferably from 0.1 to 5%.

NC composites could also be prepared with higher NC quantity, however, if the quantity is >10% the optical properties of the QDs will be negatively affected due to interactions between them. On the other hand if the quantity is <0.01%, the formed films would exhibit very low brightness.

According to the present invention, NCs are embedded into the polymeric matrix. A nanocrystal composite according to the present invention comprises a polymer matrix from 90 to 99.99% by weight of the total weight of the composite, preferably from 92.5 to 99.95%, more preferably from 95 to 99.9%. If the polymeric matrix quantity is lower than 90% and the quantity of NCs is more than 10%, the optical properties of the nanocrystals will be negatively affected due to interactions between them.

Suitable polymeric matrix for the present invention is an epoxy thiol or an epoxy thiol (meth)acrylate matrix.

A polymeric matrix according to the present invention is formed by thermal or UV induced reaction of epoxy having functionality from 2 to 10 and polythiol having functionality from 2 to 10 or said polymeric matrix is formed by reaction of epoxy having functionality from 2 to 10, (meth)acrylate having functionality from 2 to 10 and polythiol having functionality from 2 to 10.

The Applicant has discovered that the polymeric matrix according to the present invention provides high thermal and photothermal stability to the NCs.

A polymeric matrix according to the present invention is formed from polythiols having functionality from 2 to 10, preferably from 2 to 6, more preferably from 2 to 4 and even more preferably from 3 to 4.

Suitable polythiol for use in the present invention is selected from the group consisting of 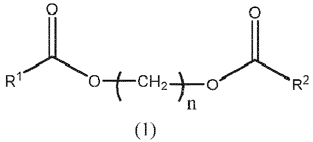 wherein n is 2 - 10, R¹ and R² are same or different and are independently selected from-CH₂-CH(SH)CH₃ and -CH₂-CH₂-SH; 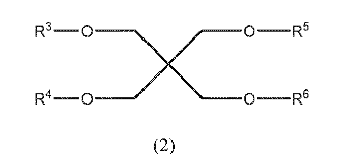 wherein R³, R⁴, R⁵ and R⁶ are same or different and are independently selected from-C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH, -C(O)-CH(SH)-CH₃; 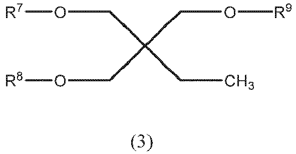 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH,-C(O)-CH(SH)-CH₃ and o is 1-10; 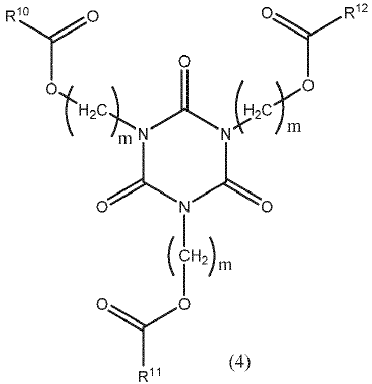 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃; and mixtures thereof.

Preferably said polythiol is selected from the group consisting of glycol di(3-mercaptopropionate), pentaerythritol tetrakis (3-mercaptobutylate), 1,3,5-tris(3-mercaptobutyloxethyl)-1,3,5-triazine-2,4,6(1 H,3H,5H)-trione, 1,4-bis (3-mercaptobutylyloxy) butane, tris[2-(3-mercaptopropionyloxy)ethyl]isocyanurate, pentaerythritol tetra(3-mercaptopropionate), trimethylolpropane tris(3-mercaptopropionate), trimethylolpropane tris(3-mercaptobutyrate), ethoxylated-trimethylolpropane tri-3-mercaptopropionate, dipentaerythritol hexakis (3-mercaptopropionate) and mixtures thereof, more preferably said polythiol is primary thiol, selected from the group consisting of glycol di(3-mercaptopropionate), tris[2-(3-mercaptopropionyloxy)ethyl]isocyanurate, pentaerythritol tetra(3-mercaptopropionate), trimethylolpropane tris(3-mercaptopropionate), ethoxylated-trimethylolpropan tri-3-mercaptopropionate, dipentaerythritol hexakis (3-mercaptopropionate) and mixtures thereof, and even more preferably said polythiol is selected from the group consisting of tris[2-(3-mercaptopropionyloxy)ethyl]isocyanurate, pentaerythritol tetra(3-mercaptopropionate), trimethylolpropane tris(3-mercaptopropionate) and mixtures thereof.

Preferred polythiols are desired due the fact that they provide appropriate viscosity and curing speed (within minutes to 1 hour). In addition, preferred thiols in combination with epoxides and/or (meth)acrylates and nanocrystals result in a film with the desired mechanical properties - a film, which is not too brittle or rubbery and adheres well to the barrier films.

Commercially available polythiols suitable for use in the present invention is Thiocure® TMPMP from Bruno Bock.

A nanocrystal composite according to the present invention has a thiol content from 10 to 90 % by weight of the total weight of the polymeric matrix, preferably from 20 to 80%, more preferably from 30 to 70%.

Adequate quantity of thiol is needed for a complete and good cure. If the amount of thiol is too low the matrix is not cured completely. A slight excess of thiol may be beneficial for the optical properties, this is because it leads to a maximum conversion of the epoxy groups. Unreacted epoxy groups are detrimental for the thermal stability.

A polymeric matrix according to the present invention is formed from epoxides having functionality from 2 to 10, preferably from 2 to 6, and more preferably from 2 to 4.

Suitable epoxide for use in the present invention is selected from the group consisting of 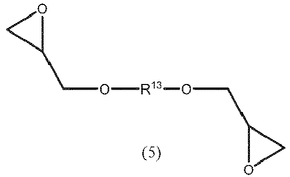 wherein R¹³ is selected from 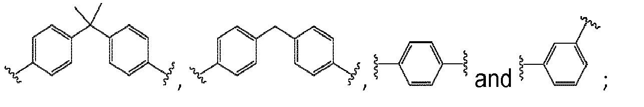 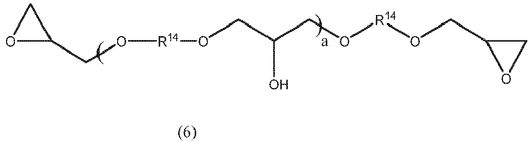 wherein a is 2 - 10, preferably 4 - 6 and R¹⁴ is selected from 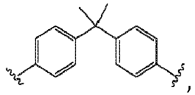 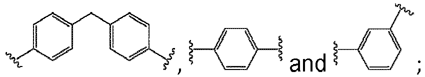 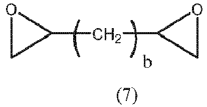 wherein b is 2 - 10, preferably 4 - 6, more preferably b is 4; 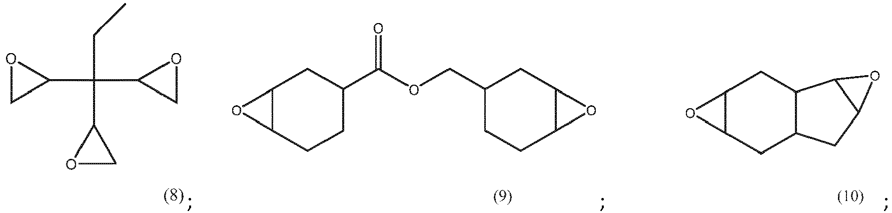 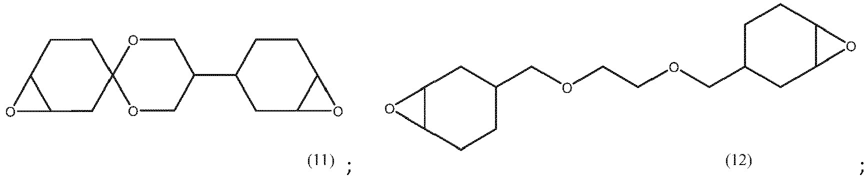 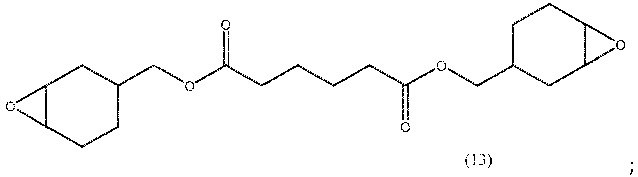 and mixtures thereof.

Preferably said epoxy is selected from the group consisting of 2,2-Bis[4-(glycidyloxy)phenyl]propane, bisphenol A diglycidyl ether, 1,4-butanediol diglycidyl ether, bisphenol F glycidyl ether and mixtures thereof.

Bis A epoxy is preferred epoxy because of its transparency and good reactivity. On the other hand, cycloaliphatic epoxies can be used, however, they have slower cure and need higher temperature, which is not beneficial for the NCs.

Commercially available epoxides suitable for use in the present invention are DER 332 and DER 331 from DOW and Epon 825, Epon 826, Epon 827, Epon 828.

A nanocrystal composite according to the present invention has an epoxy content from 10 to 90 % by weight of the total weight of the polymeric matrix, preferably from 20 to 80%, more preferably from 30 to 70%.

Adequate quantity of epoxy is needed for a complete and good cure. A slight excess of thiol may be beneficial for the optical properties, this is because it leads to a maximum conversion of the epoxy groups.

In one embodiment according to the present invention the polymeric matrix also comprises an (meth)acrylate

A polymeric matrix according to the present invention is formed from (meth)acrylates having functionality from 2 to 10, preferably from 2 to 6, and more preferably from 2 to 4.

Suitable (meth)acrylate for use in the present invention is selected from the group consisting of 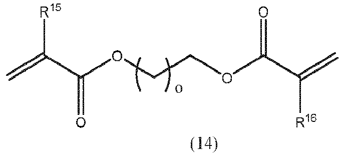 wherein o is 1 - 10, preferably o is 3-5, R¹⁵ and R¹⁶ are same or different and are independently selected from H, -CH₃, -C₂H₅, preferably R¹⁵ and R¹⁶ are same or different and are independently selected from H, -CH₃; 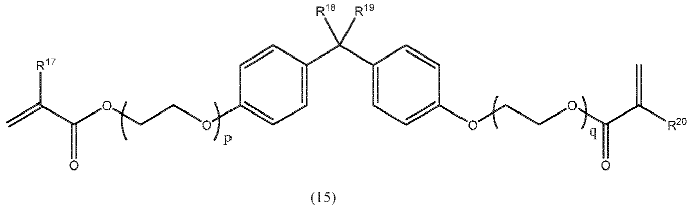 wherein p is 0 - 10, q is 0 - 10, R¹⁷, R¹⁸, R¹⁹ and R²⁰ are same or different and are independently selected from H, -CH₃, -C₂H₅, preferably R¹⁷ , R¹⁸ , R¹⁹ and R²⁰ are same or different and are independently selected from H, -CH₃; 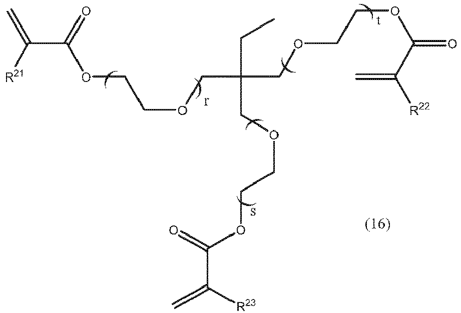 wherein r is 0 - 10, s is 0 - 10, t is 0 - 10, R²¹, R²² and R²³ are same or different and are independently selected from H, -CH₃, -C₂H₅, preferably R²¹, R²² and R²³ are same or different and are independently selected from H, -CH₃; 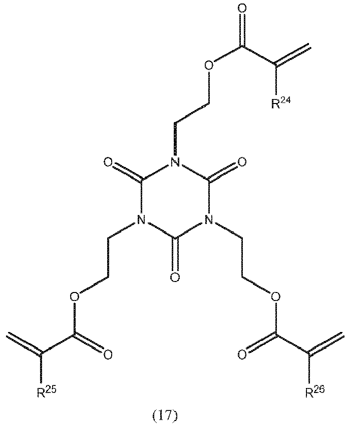 wherein, R²⁴, R²⁵ and R²⁶ are same or different and are independently selected from H,-CH₃, -C₂H₅, preferably R²⁴, R²⁵ and R²⁶ are same or different and are independently selected from H, -CH₃; 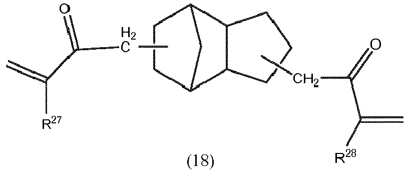 wherein, R²⁷ and R²⁸ are same or different and are independently selected from H, -CH₃,-C₂H₅, preferably R²⁷ and R²⁸ are same or different and are independently selected from H, -CH₃; and mixtures thereof.

Preferably said (meth)acrylate is selected from the group consisting of ethoxylated bisphenol A diacrylate having three ethoxy groups, ethoxylated bisphenol A diacrylate having two ethoxy groups, 1,6-hexanediol diacrylate, trimethylolpropane trimethacrylate, ethoxylated trimethylolpropane triacrylate having three ethoxy groups, bisphenol A based oligomers and mixtures thereof.

Above mentioned preferred (meth)acrylates are preferred because they provide ideal curing speed, transparency and good optical properties. In addition, they provide stability for QDs, especially the bisphenol A acrylate. On the other hand, 1,6-hexanediol diacrylate has a low viscosity and can be used as reactive diluent.

Commercially available (meth)acrylates suitable for use in the present invention are SR 349, SR 348 and SR 238 from Sartomer.

Suitable polymeric matrix for use in the present invention may also be formed from (meth)acrylate epoxy oligomer.

A nanocrystal composite according to the present invention has an acrylate content, when present in the polymeric matrix from 0 to 80 % by weight of the total weight of the polymeric matrix, preferably from 1 to 50%, more preferably from 2 to 40%.

Since there is no radical initiator in the composition, the (meth)acrylate is cured by the thiol. If the (meth)acrylate quantity is above 80%, the composition will not cure completely.

The NC composites according to the present invention may be cured by a thermal initiator, which is preferably a base or by a photoinitiator, which releases a base upon excitation by light.

The NC composites according to the present invention may further comprise a photoinitiator or a thermal initiator.

Suitable thermal initiators for use in the present invention are organic bases such as dimethylacetamide, dimethylformamide, trimethylamine, 1,8-Diazabicyclo[5.4.0]undec-7-ene, 1,5-Diazabicyclo[4.3.0]non-5-ene, ethylmethylimidazole and imidazole among others.

A NC composite according to the present invention may comprise a thermal initiator from 0 to 6% by weight of the total weight of the composite, preferably from 0.01 to 3%, more preferably from 0.01 to 2%.

Suitable photoinitiators for use in the present invention are for example 1,5,7-triazabicyclo[4.4.0]dec-5-ene · hydrogen tetraphenyl borate (TBD·HBPh₄), 2-methyl-4-(methylthio)-2-morpholinopropiophenone, 2-(9-Oxoxanthen-2-yl)propionic acid-1,5,7 triazabicyclo[4.4.0]dec-5-ene and mixtures thereof.

A NC composite according to the present invention may further comprise a photoinitator from 0 to 6% by weight of the total weight of the composite, preferably from 0.01 to 3%, more preferably from 0.01 to 2%.

NC composites according to the present invention are solid after the cure at room temperature.

A NC-composite according to the present invention have NCs embedded into the polymer matrix. NCs are solid and integral part of the network structure. The structure allows maintenance of the optical properties of the NCs. Furthermore, this structure allows to achieve high loadings due to the high compatibility of the NCs with the polymeric matrix. In addition to above, the structure provides high thermal stability and moisture stability. The polymeric matrix according to the present invention provides better protection against oxidation and/or other degradation processes. The thiols used in the composite according to the present invention increase the stability of the NCs and in addition, the epoxy resins provide good barrier properties.

The NCs suitable for use in the present invention are prepared by using known processes from the literature or acquired commercially. Suitable NCs can be prepared in several ways of mixing all reactants together.

The NC composites according to the present invention can be produced from the various NCs with various different kind of ligands. The present invention does not involve a ligand exchange step.

The NC composites according to the present invention can be prepared in several ways of mixing all ingredients together.

In one embodiment, the preparation of the NC composites according to the present invention comprises following steps:
1) adding catalyst;
2) adding epoxy;
3) adding polythiol to form the polymer matrix;
4) adding NCs in toluene or aminosilicone and mixing;
5) evaporating toluene; and
6) curing with UV light and/or electron beam and/or temperature.

In another embodiment, the preparation of the NC composites according to the present invention comprises following steps:
1) adding catalyst;
2) adding epoxy;
3) adding (meth)acrylate to form the polymer matrix;
4) adding polythiol to form the polymer matrix;
5) adding NCs in toluene and mixing;
6) evaporating toluene; and
7) curing with UV light and/or electron beam and/or temperature.

Thermal curing temperature is preferably from 10 °C to 250°C, more preferably from 20°C to 120°C. In addition, thermal curing time is preferably from 10 seconds to 24 hours, more preferably from 1 minute to 10 hours and even more preferably from 1 minute to 15 minutes.

Photocuring UV intensity is preferably from 1 to 2000 mW/cm², more preferably from 50 to 500 mW/cm². An UV cure time of the nanocrystal composite according to the present invention is from 0.5 second to 500 seconds, preferably from 1 second to 120 seconds, more preferably from 1 second to 60 seconds.

The Applicant has found out that after thermal and photothermal aging of the NC epoxy thiol / epoxy thiol (meth)acrylate composite films according to the present invention, the edge ingress observed is very small from 0 to 0.5 mm, compared to the edge ingress of the commercially available film from 1 to 3 mm.

The polymerisation of the matrix takes place in the presence of NCs and at the same time the NCs are fixed into the matrix. This way, the benefits of the resin matrix are provided to the NCs.

The present invention also encompasses a cured nanocrystal composite according to the present invention.

The present invention also relates a film comprising a nanocrystal composite according to the present invention, wherein said film comprises a first barrier film and a second barrier film, wherein said nanocrystal composite is between the first and second barrier film.

First and second barrier films can be formed of any useful film material that can protect the NCs from environmental conditions, such as oxygen and moisture. Suitable barrier films include for example polymers, glass or dielectric materials. Suitable barrier layer materials for use in the present invention include, but are not limited to, polymers such as polyethylene terephthalate (PET); oxides such as silicon oxide (SiO₂, Si₂O₃), titanium oxide (TiO₂) or aluminum oxide (Al₂O₃); and mixtures thereof.

In various embodiments each barrier layer of the NC film includes at least two layers of different materials or compositions, such that the multi-layered barrier eliminates or reduces pinhole defect alignment in the barrier layer, providing an effective barrier to oxygen and moisture penetration into the NC material. The NC film can include any suitable material or combination of materials and any suitable number of barrier layers on either or both sides of the NC composite material. The materials, thickness, and number of barrier layers will depend on the particular application, and will be chosen to maximize barrier protection and brightness of the NC while minimizing thickness of the NC film.

In various embodiments first and second barrier layers are a laminate film, such as a dual laminate film, where the thickness of first and second barrier layer is sufficiently thick to eliminate wrinkling in roll-to-roll or laminate manufacturing processes. In one preferred embodiment the first and second barrier films are polyester films (e.g., PET) having an oxide layer.

The present invention also relates to a product comprising a nanocrystal composite according to the present invention, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

The present invention also relates to use of nanocrystal composite according to the present invention as a source of photoluminescence or electroluminescence.

The present invention also relates to a product comprising a film comprising a nanocrystal composite according to the present invention, wherein said film comprises a first barrier film and a second barrier film, wherein said nanocrystal composite is between the first and second barrier film, and wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

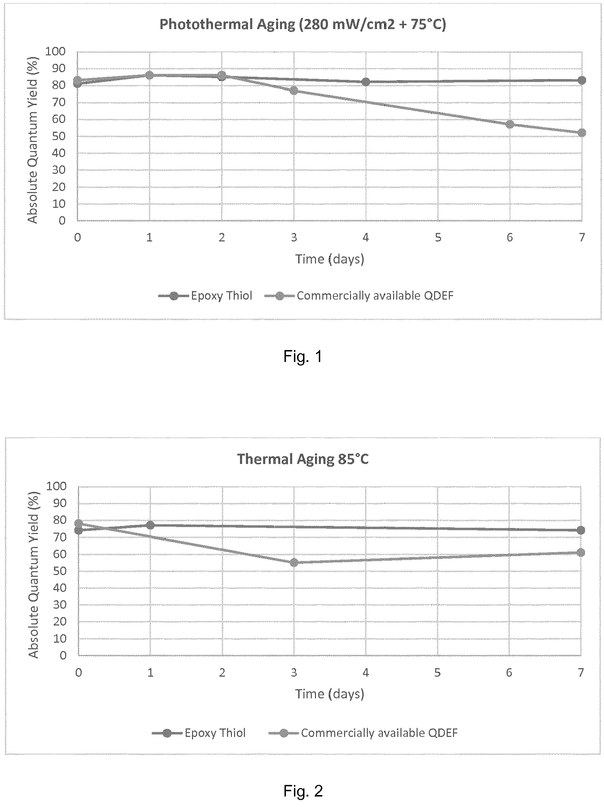

The NC epoxy thiol composite films according to the present invention show excellent photothermal and thermal stability. The films do not show a degradation of the NCs after seven days thermal or photothermal aging. Moreover, the aged film samples do not show a measurable edge ingress after seven days of thermal or photothermal aging. By the term "edge ingress" is meant herein degraded areas at the edges of the film material. This indicates an improved stability of the NCs towards air and moisture. The NC composites according to the present invention were compared with a commercial Quantum dot enhancement film (QDEF), which was removed from the commercially available touch screen device. This commercial QDEF comprises quantum dots embedded in adhesive matrix. The stability of the NCs in the film is significantly improved. This is clearly illustrated in figure 1 and figure 2.

### Examples

The quantum yields of the films were measured with Hamamatsu Absolute PL Quantum Yield Spectrometer, which contains an integrating sphere.

### Example 1

### NC Epoxy Thiol Composite Material (DBU Catalysis)

0.005 g (0.3 wt.%) 1,8-diazabicyclo[5.4.0]undec-7-en (Sigma Aldrich), 0.902 g (55 wt.%) of bisphenol A diglycidyl ether (D.E.R.™ 331, Dow) and 0.698 g (42 wt.%) of trimethylolpropane tri(3-mercaptopropionate) (Thiocure® TMPMP, Bruno Bock) including 0.05 g of semiconductor NC dispersion (CdSe/ZnS in toluene, Nanosys) were mixed in a conditioning mixer for 1 minute at 1000 rpm. The mixture was cured at room temperature within 1 hour. A solid semiconductor NC composite with a photoluminescent quantum yield (QY) of 82 % was obtained.

### Example 2

### NC Epoxy Thiol Composite Film (DBU Catalysis)

0.005 g (0.3 wt.%) 1,8-diazabicyclo[5.4.0]undec-7-en (Sigma Aldrich), 0.902 g (55 wt.%) of bisphenol A diglycidyl ether (D.E.R.™ 331) and 0.698 g (42 wt.%) of trimethylolpropane tri(3-mercaptopropionate) (Thiocure® TMPMP, Bruno Bock) including 0.05 g of semiconductor NC dispersion (CdSe/ZnS in toluene, Nanosys) were mixed in a nitrogen filled glovebox and coated between two barrier layers. Two 100 µm thick metal films were used as spacers to obtain a NC composite layer with a thickness of 100 µm. The film was cured at 85°C (30 min).

The NC composite film was aged in a box oven set at 85°C. The absolute QY was tracked for 2 weeks and is shown in the table 1 below:

**Table 1**

| ***Day 0*** | ***Day 1*** | ***Day 7*** | ***Day 14*** |
|---|---|---|---|
| 74 % | 77 % | 74 % | 70 % |

Another NC composite film was aged in a custom-built photothermal aging chamber at 50 mW/cm² at 75°C. The excitation wavelength was 460 nm. The absolute QY evolution was tracked for 1 week, and results are shown in table 2 below:

**Table 2**

| ***Day 0*** | ***Day 1*** | ***Day 3*** | ***Day 7*** |
|---|---|---|---|
| 74 % | 80 % | 78 % | 82 % |

### Example 3

### NC Epoxy Thiol Composite Film (Thiolate Catalysis)

0.010 g (0.6 wt.%) sodium dodecane thiolate (synthesized from dodecane thiol and NaOH) was dissolved in 0.698 g (42 wt.%) of trimethylolpropane tri(3-mercaptopropionate) (Thiocure® TMPMP, Bruno Bock) and mixed with 0.902 g (55 wt.%) of bisphenol A diglycidyl ether (D.E.R.™ 331) and 0.05 g of semiconductor NC dispersion (CdSe/ZnS in toluene, Nanosys) in a conditioning mixer for 1 minute at 1000 rpm. The mixture was coated between two barrier layers using 100 µm thick metal films as spacers to obtain a NC composite layer with a thickness of 100 µm. The film was cured at 85°C (30 min).

The NC composite film was aged in a box oven set at 85°C. The absolute QY was tracked for 2 weeks and is shown in table 3 below:

**Table 3**

| ***Day 0*** | ***Day 1*** | ***Day 7*** | ***Day 14*** |
|---|---|---|---|
| 74 % | 68 % | 63 % | 61 % |

Another NC composite film was aged in a custom-built photothermal aging chamber at 50 mW/cm² at 75°C. The excitation wavelength was 460 nm. The absolute QY evolution was tracked for 1 week and the results are shown in table 4 below:

**Table 4**

| ***Day 0*** | ***Day 1*** | ***Day 3*** | ***Day 7*** |
|---|---|---|---|
| 74 % | 74 % | 77 % | 74 % |

### Example 4

### Epoxy Thiol (Photobase Catalysis)

0.050 g (3 wt.%) of a DBU photobase catalyst (quaternary ammonium salt of 1,8-diazabicyclo[5.4.0]undec-7-ene and phenylglyoxylic acid (Sigma Aldrich) synthesized according to Polym. Chem., 2014, 5, 6577) was dissolved in 0.698 g (42 wt.%) of trimethylolpropane tri(3-mercaptopropionate) (Thiocure® TMPMP, Bruno Bock) and mixed with 0.902 g (55 wt.%) of bisphenol A diglycidyl ether (D.E.R.™ 331, Dow) and 0.05 g of semiconductor NC (CdSe/ZnS in toluene, Nanosys) in a conditioning mixer for 1 minute at 1000 rpm. The mixture was coated between two barrier layers using 100 µm thick metal films as spacers to obtain a NC composite layer with a thickness of 100µm. The film was cured for 20 s in a Loctite Curing Chamber.

### Example 5

### Epoxy Acrylate Thiol (DBU Catalysis)

0.005 g (0. wt.%) 1,8-diazabicyclo[5.4.0]undec-7-en (Sigma Aldrich), 0.468 g (wt.%) of bisphenol A diglycidyl ether (D.E.R.™ 331), 0.580g ethoxylated bisphenol A diacrylate (SR 349, Sartomer), 0.698 g (42 wt.%) of trimethylolpropane tri(3-mercaptopropionate) (Thiocure® TMPMP, Bruno Bock) and 0.05 g of semiconductor NC (CdSe/ZnS in toluene, Nanosys) were mixed in a nitrogen filled glovebox and coated between two barrier layers. Two 100 µm thick metal films were used as spacers to obtain a NC composite layer with a thickness of 100µm. The film was cured at 85°C (30 min).

The NC composite film was aged in a box oven set at 85°C. The absolute QY was tracked for 2 weeks and is shown in table 5 below:

**Table 5**

| ***Day 0*** | ***Day 1*** | ***Day 7*** | ***Day 14*** |
|---|---|---|---|
| 68 % | 70 % | 57 % | 57 % |

Another NC-composite was aged in a custom-built photothermal aging chamber at 50 mW/cm² at 75°C. The excitation wavelength was 460 nm. The QY evolution was tracked for 1 week and the results are shown in table 6 below:

**Table 6**

| ***Day 0*** | ***Day 1*** | ***Day 3*** | ***Day 7*** |
|---|---|---|---|
| 68 % | 81 % | 73 % | 77 % |

## Claims

1. A nanocrystal composite comprising
a) a plurality of nanocrystals comprising a core comprising a metal or a semiconductive compound or a mixture thereof and at least one ligand, wherein said core is surrounded by at least one ligand,
b) a polymeric matrix, wherein said polymeric matrix is formed by reaction of epoxy having functionality from 2 to 10 and polythiol having functionality from 2 to 10
or
said polymeric matrix is formed by reaction of epoxy having functionality from 2 to 10, (meth)acrylate having functionality from 2 to 10 and polythiol having functionality from 2 to 10,
and wherein said nanocrystals are embedded into said polymeric matrix.

2. A nanocrystal composite according to claim 1, wherein said core comprising a metal or semiconductive compound or a mixture thereof is composed of elements selected from combination of one or more different groups of the periodic table, preferably said metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof, more preferably said metal or semiconductive compound is selected from the group consisting of Si, Ge, SiC, and SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂ and AgGaSe₂ and even more preferably said metal or semiconductive compound is seleted from group consisting of CdSe, InP and mixtures thereof.

3. A nanocrystal composite according to claim 1 or 2, wherein said core comprises a core and at least one monolayer or multilayer shell or wherein said core comprises a core and at least two monolayer and/or multilayer shells.

4. A nanocrystal composite according to any of claims 1 to 3, wherein said polythiol has a functionality from 2 to 6, more preferably from 2 to 4 and even more preferably from 3 to 4.

5. A nanocrystal composite according to any of claims 1 to 4, wherein said polythiol is selected from the group consisting of 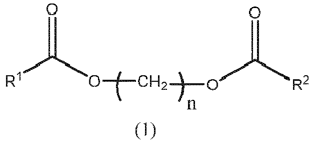 wherein n is 2 - 10, R¹ and R² are same or different and are independently selected from -CH₂-CH(SH)CH₃ and -CH₂-CH₂-SH; 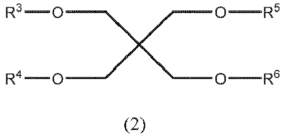 wherein R³, R⁴, R⁵ and R⁶ are same or different and are independently selected from -C(O)-CH₂-CH₂-SH, -C(O)-CH₂-CH(SH)CH₃, -CH₂-C(-CH₂-O-C(O)-CH₂-CH₂-SH)₃,-C(O)-CH₂-SH, -C(O)-CH(SH)-CH₃; 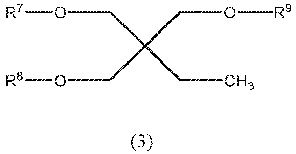 wherein R⁷, R⁸ and R⁹ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 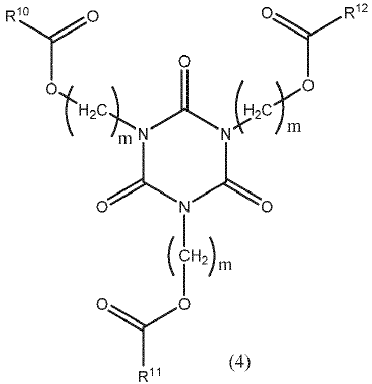 wherein m is 2-10, R¹⁰, R¹¹ and R¹² are same or different and independently selected from -CH₂-CH₂SH, -CH₂-CH(SH)CH₃, -C(O)-CH₂-SH, -C(O)-CH(SH)-CH₃; and mixtures thereof,
preferably said polythiol is selected from the group consisting of glycol di(3-mercaptopropionate), pentaerythritol tetrakis (3-mercaptobutylate), 1,3,5-tris(3-mercaptobutyloxethyl)-1,3,5-triazine-2,4,6(1H,3H,5H)-trione, 1,4-bis (3-mercaptobutylyloxy) butane, tris[2-(3-mercaptopropionyloxy)ethyl]isocyanurate, pentaerythritol tetra(3-mercaptopropionate), trimethylolpropane tris(3-mercaptopropionate), trimethylolpropane tris(3-mercaptobutyrate), ethoxylated-trimethylolpropane tri-3-mercaptopropionate, dipentaerythritol hexakis (3-mercaptopropionate) and mixtures thereof, more preferably said polythiol is primary thiol, selected from the group consisting of glycol di(3-mercaptopropionate), tris[2-(3-mercaptopropionyloxy)ethyl]isocyanurate, pentaerythritol tetrakis(3-mercaptopropionate), trimethylolpropane tris(3-mercaptopropionate), ethoxylated-trimethylolpropane tri-3-mercaptopropionate, dipentaerythritol hexakis (3-mercaptopropionate) and mixtures thereof, and even more preferably said polythiol is selected from the group consisting of tris[2-(3-mercaptopropionyloxy)ethyl]isocyanurate, pentaerythritol tetra(3-mercaptopropionate), trimethylolpropane tris(3-mercaptopropionate) and mixtures thereof.

6. A nanocrystal composite according to any of claims 1 to 5, wherein said epoxy has a functionality from 2 to 6, preferably from 2 to 4.

7. A nanocrystal composite according to any of claims 1 to 6, wherein said epoxy is selected from the group consisting of; 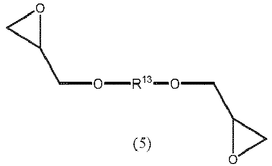 wherein R¹³ is selected from 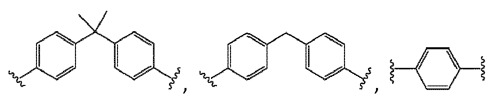 and 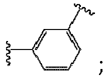 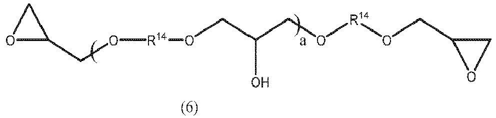 wherein a is 2 - 10, preferably 4 - 6 and R¹⁴ is selected from 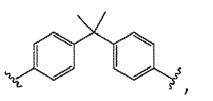 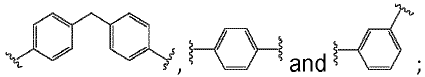 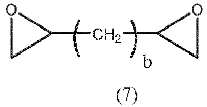 wherein b is 2 - 10, preferably 4 - 6, more preferably b is 4; 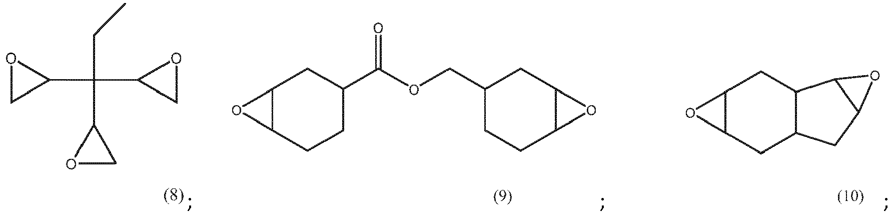 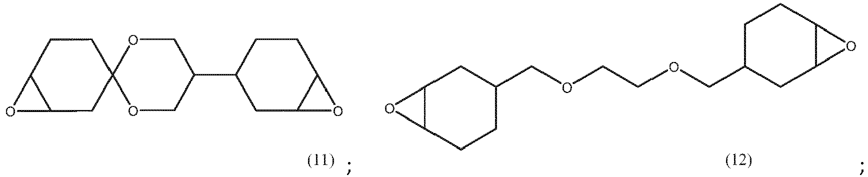 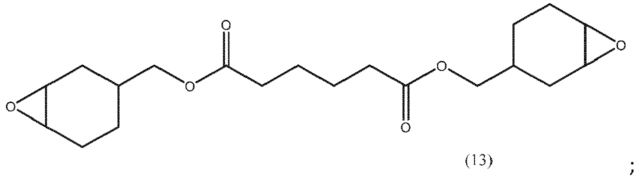 and mixtures thereof, preferably said epoxy is selected from the group consisting of 2,2-Bis[4-(glycidyloxy)phenyl]propane, bisphenol A diglycidyl ether, 1,4-butanediol diglycidyl ether, bisphenol F glycidyl ether and mixtures thereof.

8. A nanocrystal composite according to any of claims 1 to 7, wherein said (meth)acrylate has a functionality from 2 to 6, preferably from 2 to 4.

9. A nanocrystal composite according to any of claims 1 to 8, wherein said (meth)acrylate is selected from the group consisting of 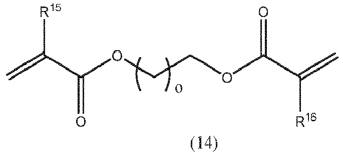 wherein o is 1 - 10, preferably o is 3-5, R¹⁵ and R¹⁶ are same or different and are independently selected from H, -CH₃, -C₂H₅, preferably R¹⁵ and R¹⁶ are same or different and are independently selected from H, -CH₃; 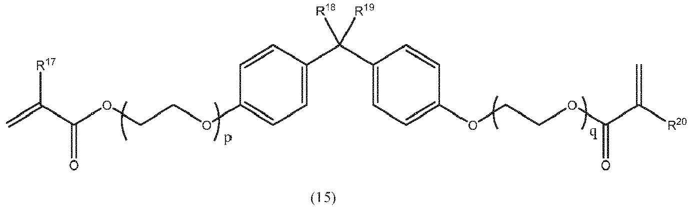 wherein p is 0 - 10, q is 0 - 10, R¹⁷ , R¹⁸, R¹⁹ and R²⁰ are same or different and are independently selected from H, -CH₃, -C₂H₅, preferably R¹⁷, R¹⁸, R¹⁹ and R²⁰ are same or different and are independently selected from H, -CH₃; 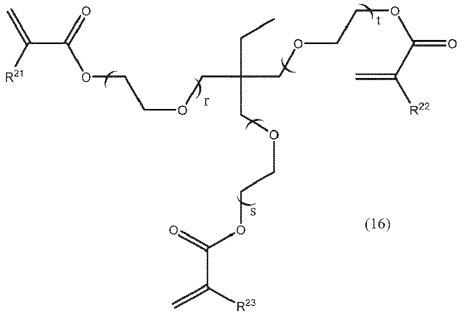 wherein r is 0 - 10, s is 0 - 10, t is 0 - 10, R²¹, R²² and R²³ are same or different and are independently selected from H, -CH₃, -C₂H₅, preferably R²¹ , R²² and R²³ are same or different and are independently selected from H, -CH₃; 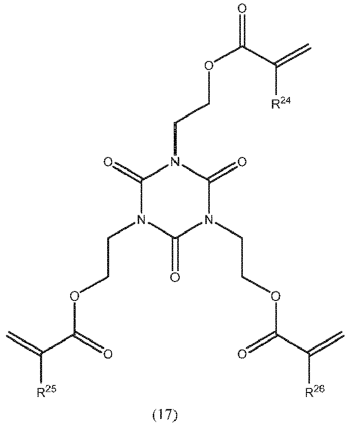 wherein, R²⁴, R²⁵ and R²⁶ are same or different and are independently selected from H, -CH₃, -C₂H₅, preferably R²⁴, R²⁵ and R²⁶ are same or different and are independently selected from H, -CH₃; 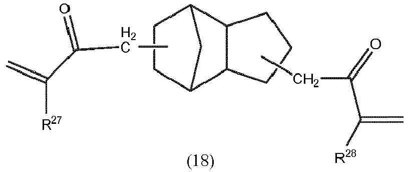 wherein, R²⁷ and R²⁸ are same or different and are independently selected from H, -CH₃, -C₂H₅, preferably R²⁷ and R²⁸ are same or different and are independently selected from H, -CH₃; and mixtures thereof,
preferably said (meth)acrylate is selected from the group consisting of ethoxylated bisphenol A diacrylate having three ethoxy groups, ethoxylated bisphenol A diacrylate having two ethoxy groups, 1,6-hexanediol diacrylate, trimethylolpropane trimethacrylate, ethoxylated trimethylolpropane triacrylate having three ethoxy groups, and mixtures thereof.

10. A nanocrystal composite according to any of claims 1 to 9 comprising nanocrystals from 0.01 to 10 % by weight of the total weight of the composite, preferably from 0.05 to 7.5%, more preferably from 0.1 to 5%.

11. A nanocrystal composite according to any of claims 1 to 10 comprising a polymer matrix from 90 to 99.99% by weight of the total weight of the composite, preferably from 92.5 to 99.95%, more preferably from 95 to 99.9%.

12. A cured nanocrystal composite according to any of claims 1 to 11.

13. A film comprising a nanocrystal composite according to any of claims 1 to 12, wherein said film comprises a first barrier film and a second barrier film, wherein said nanocrystal composite is between the first and second barrier film.

14. A product comprising a nanocrystal composite according to any of claims 1 to 12, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

15. Use of nanocrystal composite according to any of claims 1 to 12 as a source of photoluminescence or electroluminescence.
